# EUROPÄISCHE PATENTSCHRIFT

(11) **EP 2 878 224 B1**
(45) Veröffentlichungstag und Bekanntmachung des Hinweises auf die Patenterteilung: **18.05.2022**
(21) Anmeldenummer: 14195175.6
(22) Anmeldetag: 27.11.2014
(51) Int. Cl.: A45F 5/00, H04B 5/00, H05K 9/00

(54) **Schutzvorrichtung für ein elektronisches Endgerät**
Protection device for an electronic terminal
Dispositif de protection pour un appareil électronique

(30) Priorität: 28.11.2013 DE 202013105423 U
(43) Veröffentlichungstag der Anmeldung: 03.06.2015
(73) Patentinhaber: Vodafone GmbH, 40549 Düsseldorf (DE)
(72) Erfinder: Caldarone, Laura, 40219 Düsseldorf (DE); Abril, Jaime, 41564 Kaarst (DE); Ritzmann, Mark, 40477 Düsseldorf (DE)
(74) Vertreter: Müller, Thomas

(56) Entgegenhaltungen:
- GB-A- 2 492 088
- KR-B1- 101 191 867
- US-A1- 2010 182 764
- US-A1- 2012 168 516
- US-A1- 2013 009 413
- Shain Armstrong: "Improve Your RFID Read Range with these Six Factors", , 16. September 2013 (2013-09-16), XP055253165, Gefunden im Internet: URL:https://web.archive.org/web/2013091609 2412/http://blog.atlasrfidstore.com/improv e-rfid-read-range [gefunden am 2016-02-25]

## Beschreibung

Die vorliegende Erfindung betrifft ein Verfahren zur Optimierung einer Montageposition eines NCF-Tags in einem elektronischen Endgerät gemäß dem Oberbegriff von Patentanspruch 1.

Elektronische Endgeräte sind auf vielfältigste Weise bekannt. Beispielsweise kann es sich hierbei um Mobiltelefone handeln.

Weiterhin ist es bereits seit langem bekannt, für derartige elektronische Endgeräte Schutzvorrichtungen vorzusehen. Solche Schutzvorrichtungen geben dem elektronischen Endgerät ein eigenes, individuelles Aussehen. Zum anderen dienen Schutzvorrichtungen dazu, das elektronische Endgerät vor Beschädigungen zu schützen.

Schutzvorrichtungen für elektronische Endgeräte sind im Stand der Technik auf vielfältigste Weise bekannt. In der DE 10 2011 107 217 A1 beispielsweise ist eine Schutzvorrichtung in Form einer Transporthülle beschrieben, in die ein zu transportierender Gegenstand hineingeschoben wird.

Aus der GB 2492088 A wird eine Lösung beschrieben, bei der ein NFC-Tag mit einem Mobiltelefon in Verbindung gebracht wird, wobei der NFC-Tag in einer Aufnahmevorrichtung eines Schutzgehäuses für das Mobiltelefon untergebracht ist. Um eine negative Beeinflussung des NFC-Tags durch das Mobiltelefon zu reduzieren, ist zwischen dem Mobiltelefon und dem NFC-Tag eine Schicht aus abschirmendem Material vorgesehen. Eine dazu ähnliche Lösung offenbaren auch die US 2010/0182764 A1 oder die US 2012/0168516 A1.

Aus dem allgemeinen Stand der Technik ist im Zusammenhang mit Mobiltelefonen beispielsweise bekannt, die Schutzvorrichtungen in Form von Schutzhüllen oder Schutzschalen auszubilden. Derartige Schutzvorrichtungen weisen zunächst eine Rückwand auf, die im bestimmungsgemäßen Gebrauch mit der Rückseite des elektronischen Endgeräts in Kontakt kommt. Über diese Rückwand wird die Rückseite des elektronischen Endgeräts geschützt. Zum Schutz der Seiten des elektronischen Endgeräts ist wenigstens ein Rahmenelement vorgesehen, welches sich von der Rückwand der Schutzvorrichtung abragend erstreckt. Rückwand und Rahmenelement bilden einen Aufnahmeraum, in welchen das elektronische Endgerät, beispielsweise das Mobiltelefon, einsetzbar ist.

In jüngster Zeit wird es immer üblicher, im Zusammenhang mit elektronischen Endgeräten, beispielsweise Mobiltelefonen, so genannte NFC-Tags zu verwenden. Hierbei handelt es sich um Einrichtungen, die nach dem Prinzip der an sich bekannten Nahbereichs-Kommunikations-Technologie (Near Field Communication Technology) funktionieren. Derartige NFC-Tags, die oftmals an dem elektronischen Endgerät befestigt werden müssen, kommunizieren mit einem NFC-Lesegerät. Die NFC-Tags weisen die für die Kommunikation erforderliche Hardware und gegebenenfalls Software auf. Derartige NFC-Tags werden beispielsweise im Bereich des Bezahlwesens eingesetzt.

NFC-Tags befinden sich noch nicht im standardgemäßen Auslieferungsumfang eines elektronischen Endgeräts, so dass es sich hierbei in der Regel um einen Nachrüstartikel handelt. Für den Nutzer bedeutet dies, dass er den NFC-Tag an oder in dem elektronischen Endgerät befestigen muss. Die Platzierung des NFC-Tags an einer geeigneten Stelle des elektronischen Endgeräts ist nicht ohne Probleme, so dass die Hersteller Bedienungsanleitungen zur Verfügung stellen müssen, wo der NFC-Tag geeigneter Weise mit dem elektronischen Endgerät in Verbindung gebracht werden muss. Dennoch gelingt es den Nutzer nicht immer, den NFC-Tag an einer geeigneten Stelle an dem elektronischen Endgerät zu befestigen.

Weiterhin werden NFC-Tags üblicherweise durch Kleben oder dergleichen an der Rückseite oder an einer Seitenwand des elektronischen Endgeräts befestigt. Dadurch steht der NFC-Tag im Vergleich zu der Oberfläche, auf der er befestigt ist, über. Dies hat den Nachteil, dass der NFC-Tag beschädigt werden oder sich vom elektronischen Endgerät lösen kann, etwa wenn dieses in eine Tasche gesteckt oder auf einer Unterlage abgelegt wird und dann nicht mehr ordnungsgemäß funktionieren kann. Außerdem kann der NFC-Tag nicht mit einem weiteren elektronischen Endgerät verwendet werden, da es durch das Kleben oder dergleichen fest mit dem Endgerät verbunden ist und sich nicht mehr davon abtrennen lässt ohne dabei zerstört zu werden.

Ausgehend vom genannten Stand der Technik liegt der vorliegenden Erfindung die Aufgabe zugrunde, ein verbessertes Verfahren zur Optimierung einer Montageposition eines NFC-Tags in einem elektronischen Endgerät bereitzustellen.

Diese Aufgabe wird erfindungsgemäß gelöst durch das Verfahren mit den Merkmalen gemäß dem unabhängigen Patentanspruch 1. Weitere Merkmale und Details der Erfindung ergeben sich aus den Unteransprüchen, der Beschreibung sowie den Zeichnungen.

Das Grundkonzept der vorliegenden Erfindung besteht darin, dass nunmehr die Schutzvorrichtung, die ein sehr häufig verwendetes Accessoire ist, genutzt wird, um den NFC Tag optimal zu platzieren und zu schützen und wiederverwendbar zu machen.

Um die Performance eines NFC-Tags an einem elektronischen Endgerät zu optimieren, beispielsweise wenn dieser mit einem NFC-Lesegerät zusammenwirkt, etwa während eines Bezahlvorgangs, wird gemäß der Erfindung ein Verfahren zur Optimierung einer Montageposition eines NFC-Tags in einem elektronischen Endgerät bereitgestellt, welches die Merkmale des unabhängigen Patentanspruchs 1 aufweist. Das Verfahren ist erfindungsgemäß durch folgende Schritte gekennzeichnet:
Zunächst wird der NFC-Tag an dem elektronischen Endgerät positioniert. Anschließend wird eine NFC-Kommunikation mit einem NFC-Lesegerät initiiert. Dann wird bestimmt, ob die Kommunikation erfolgreich war. Dabei werden die vorgenannten Schritte bezüglich einer Variation wenigstens eines der folgenden Parameter durchgeführt:
- Eine Position des NFC-Tags bezüglich des elektronischen Endgeräts;
- Eine Orientierung des NFC-Tags bezüglich des elektronischen Endgeräts;
- Einen Abstand des NFC-Tags vom elektronischen Endgerät;
- Eine Annäherung des NFC-Tags an das NFC-Lesegerät;
- Eine Bauart des NFC-Lesegeräts.

Anschließend wird wenigstens eine Position bestimmt, an der die Kommunikation erfolgreich war. Bevorzugt ist vorgesehen, dass zum Bestimmen der Position, an der die Kommunikation erfolgreich war, die zuvor beschriebenen Schritte unter Variation wenigstens eines der Parameter in zwei oder mehr Durchgängen, bevorzugt in drei Durchgängen, durchgeführt werden.

Bevorzugt wird die Position, an der die Kommunikation erfolgreich war, in einer Ergebnisdatei abgespeichert.

Zusammengefasst besteht das erfindungsgemäße Verfahren insbesondere darin, dass ein elektronisches Endgerät für eine Anzahl von Kombinationen der Position und/oder der Orientierung des NFC-Tags am elektronischen Endgerät oder an/in der Schutzvorrichtung für das elektronische Endgerät und/oder des Abstands des NFC-Tags vom elektronischen Endgerät im Falle eines metallischen Gerätekörpers oder Gehäuses, und/oder für eine bestimmte Anzahl von verschiedenen Wegen, wie das elektronische Endgerät gehandhabt wird und wie sich das elektronische Endgerät einem NFC-Lesegerät nähert, und/oder für eine bestimmte Anzahl unterschiedlicher Typen von NFC-Lesegeräten getestet wird. Bevorzugt wird deshalb gegen verschiedene Typen von NFC-Lesegeräten getestet, da deren NFC-Antennen und Strukturen häufig wechseln.

Die Durchführung des Verfahrens wird bevorzugt ausreichend oft wiederholt, um statistisch signifikante Resultate zu erzielen.

Bevorzugt wird das Verfahren mittels eines automatisierten Systems durchgeführt, das eine Handhabungseinrichtung für das elektronische Endgerät, beispielsweise einen Roboterarm aufweist. Über die Handhabungseinrichtung wird der NFC-Tag in Bezug auf das elektronische Endgerät positioniert. Weiterhin ist eine Steuereinrichtung für die Handhabungseinrichtung vorgesehen, die derart bereitgestellt ist, dass sie in der Lage ist, die Handhabungseinrichtung derart zu steuern, dass mit dem System das vorstehende beschriebene erfindungsgemäße Verfahren durchgeführt werden kann.

Zur Durchführung des Verfahrens wird eine Schutzvorrichtung für ein elektronisches Endgerät, insbesondere für ein Mobiltelefon, bereitgestellt, aufweisend eine Rückwand und wenigstens ein Rahmenelement, wobei die Rückwand und das Rahmenelement einen Aufnahmeraum begrenzen, in welchen das elektronische Endgerät einsetzbar ist. Die Schutzvorrichtung ist dadurch gekennzeichnet, dass die Schutzvorrichtung eine Aufnahmevorrichtung für einen NFC-Tag aufweist, und dass die Aufnahmevorrichtung an einer definierten Position an/in der Schutzvorrichtung vorgesehen ist, derart, dass im Verbindungszustand der Schutzvorrichtung mit dem elektronischen Endgerät ein in der Aufnahmevorrichtung aufgenommener NFC-Tag in Beziehung zu dem elektronischen Endgerät eine optimierte Montageposition aufweist,, bei der der NFC-Tag eine maximale Signalstärke und/oder eine maximale Signalqualität und/oder ein maximales Signal/Rausch-Verhältnis aufweist.

Die Schutzvorrichtung wirkt in ihrem bestimmungsgemäßen Gebrauch mit einem elektronischen Endgerät und mit einem NFC-Tag zusammen. Im bestimmungsgemäßen Gebrauch ist das elektronische Endgerät in der Schutzvorrichtung eingesetzt. Zudem ist im bestimmungsgemäßen Gebrauch der NFC-Tag in der Schutzvorrichtung aufgenommen oder positioniert. Während der Verwendung der Schutzvorrichtung stehen das elektronische Endgerät und der NFC-Tag mit dieser in Beziehung. Da Schutzvorrichtungen üblicherweise für bestimmte Typen von elektronischen Endgeräten produziert und nur für diese speziellen elektronischen Endgeräte verwendet werden können, stehen das elektronische Endgerät und die dafür vorgesehen Schutzvorrichtung in einem mehr oder weniger standardisierten Verhältnis zueinander, so dass sich die für die Schutzvorrichtung geltenden Ausgestaltungen, die sich aufgrund des elektronischen Endgeräts ergeben, herleiten lassen. Gleiches gilt für den NFC-Tag und dessen Verhältnis zur Schutzvorrichtung und zum elektronischen Endgerät.

Das elektronische Endgerät weist eine Schutzvorrichtung auf, die eine Rückwand und wenigstens ein Rahmenelement aufweist, wobei die Rückwand und das Rahmenelement einen Aufnahmeraum begrenzen, in welchem das elektronische Endgerät eingesetzt ist, und einen NFC-Tag. Das elektronische Endgerät ist dadurch gekennzeichnet, dass die Schutzvorrichtung eine Aufnahmevorrichtung für den NFC-Tag aufweist, und dass die Aufnahmevorrichtung an einer definierten Position an/in der Schutzvorrichtung vorgesehen ist, derart, dass der in der Aufnahmevorrichtung aufgenommene NFC-Tag in Beziehung zu dem elektronischen Endgerät eine optimierte Montageposition in Form einer maximalen Signalstärke und/oder einer maximalen Signalqualität und/oder einem maximalen Signal/Rausch-Verhältnis aufweist.

Ein grundlegendes Merkmal stellt die Schutzvorrichtung für das elektronische Endgerät dar. Bei dem elektronischen Endgerät handelt es sich um ein Mobiltelefon, ein Smartphone, ein Tablet-Gerät oder dergleichen.

Bevorzugt kann die Schutzvorrichtung als Schutzhülle oder Schutzschale, beispielsweise als so genanntes Back Shield, Hard Case, als Case Hülle, als Wallet Case Hülle oder dergleichen ausgebildet sein.

Die Schutzvorrichtung weist zunächst eine Rückwand auf, die im bestimmungsgemäßen Gebrauch der Schutzvorrichtung mit einer Rückseite des elektronischen Endgeräts in Kontakt kommt beziehungsweise steht.

Weiterhin weist die Schutzvorrichtung wenigstens ein Rahmenelement auf. Das Rahmenelement erstreckt sich von der Rückwand der Schutzvorrichtung. Das bedeutet insbesondere, dass das Rahmenelement von der Rückwand der Schutzvorrichtung abragt. Erfindungsgemäß ist vorgesehen, dass wenigstens ein solches Rahmenelement vorgesehen ist. Bevorzugt sind jedoch mehrere solcher Rahmenelemente, beispielsweise zwei oder vier Rahmenelemente, vorgesehen, die sich an mehreren Seiten, bevorzugt an gegenüberliegenden Seiten, von der Rückwand der Schutzvorrichtung erstrecken beziehungsweise abragen. Bevorzugt kann ein einziges, durchgängig umlaufendes Rahmenelement vorgesehen sein.

Die Rückwand der Schutzvorrichtung schützt die Rückseite des elektronischen Endgeräts. Das wenigstens eine Rahmenelement, bevorzugt das durchgängig umlaufende Rahmenelement, schützt die Seiten des elektronischen Endgeräts. Das Rahmenelement ist bevorzugt so hoch oder etwas höher als die Dicke des elektronischen Endgeräts.

Die Rückwand und das wenigstens eine Rahmenelement begrenzen einen Aufnahmeraum für das elektronische Endgerät. Das bedeutet, dass der Aufnahmeraum ausgebildet ist, dass das elektronische Endgerät in diesen einsetzbar ist. Im bestimmungsgemäßen Gebrauch der Schutzvorrichtung ist das elektronische Endgerät in dem Aufnahmeraum der Schutzvorrichtung eingesetzt. Bevorzugt ist vorgesehen, dass das elektronische Endgerät lösbar in der Schutzvorrichtung eingesetzt ist. Beispielsweise kann vorgesehen sein, dass das elektronische Endgerät in der Schutzvorrichtung eingeklemmt ist.

Die Schutzvorrichtung dient dazu, um mit einem NFC-Tag zusammenzuwirken, wobei dieser NFC-Tag Bestandteil des elektronischen Endgeräts ist.

Bei einem NFC-Tag handelt es sich um eine aus dem Stand der Technik an sich bekannte Einrichtung zur Nahbereichs-Kommunikation (Nearfield Communication). Ein Tag ist insbesondere eine Art Karte, Anhänger, Schild, Aufkleber oder dergleichen. Eine solche Einrichtung zur Nahbereichskommunikation kann die für eine solche Kommunikation erforderliche Hardware und/oder Software aufweisen. Sie kann auf verschiedene Weisen ausgebildet sein, so dass die Erfindung nicht auf bestimmte Ausgestaltungsformen beschränkt ist. Bevorzugt kann der NFC-Tag als NFC-Chip oder NFC-Sticker ausgebildet sein.

Bei der Nahbereichskommunikation handelt es sich generell um eine drahtlose Kommunikationstechnologie für Datenverbindungen über kurze Strecken, das heißt zur ortsnahen Kommunikation. Zwei mit entsprechenden Einrichtungen zur Nahbereichskommunikation ausgerüstete Einrichtungen, beispielsweise das elektronische Endgerät und ein NFC-Lesegerät, oder ein anderes elektronisches Endgerät gemäß der vorliegenden Erfindung, werden beispielsweise kurz aneinandergehalten und identifizieren sich über die Einrichtung zur Nahbereichskommunikation. Nach erfolgreicher Identifizierung kann ein Datenaustausch stattfinden.

Die Abstände für eine solche ortsnahe Kommunikation bewegen sich vorteilhaft im Bereich von einigen Zentimetern bis zu einigen Metern, vorteilhaft in einem Bereich zwischen 1 Zentimeter und einem Meter, bevorzugt in einem Bereich zwischen 2 und 20 Zentimetern, ganz besonders bevorzugt in einem Bereich zwischen 3 und 6 Zentimetern. Natürlich ist die Erfindung nicht auf bestimmte Abstände beschränkt. Diese ergeben sich vielmehr aus dem Einsatzgebiet, auf dem eine Nahbereichskommunikation stattfinden soll.

Vorteilhaft kann die Einrichtung zur Nahbereichskommunikation beziehungsweise der NFC-Tag als RFID-Einrichtung (Radio Frequency Identification), oder dergleichen ausgebildet sein. RFID ist ein Verfahren, mittels dessen Daten berührungslos übertragen, gelesen und gespeichert werden können. Die Daten werden auf einem RFID-Chip gespeichert. Das Auslesen beziehungsweise Beschreiben des Speichers erfolgt über Radiowellen. Die Entfernung, über die ein solcher RFID-Chip ausgelesen werden kann, hängt von dessen Ausführung, dem benutzen Frequenzband, der Sendestärke, von Umwelteinflüssen und dergleichen ab. Vorzugsweise weist eine solche Einrichtung zur Nahbereichskommunikation, beispielsweise das RFID-Element, einen Transponder zum Senden und/oder Empfangen von Daten auf. Ein Transponder besteht generell aus einer Prozessoreinheit und einer Antenne. Optional kann dieser auch über eine eigene Energiequelle verfügen. In diesem Fall spricht man von einem aktiven Transponder. Ein Transponder ohne eigene Energiequelle wird als passiver Transponder bezeichnet. Aktive Transponder befinden sich üblicherweise in einer Ruhestellung, in der sie keine Signale aussenden. Erst wenn sie ein bestimmtes Aktivierungssignal empfangen, aktiviert sich deren Sender. Aktive Transponder besitzen im Vergleich zu passiven Transpondern eine größere Sendereichweite. Passive Transponder verfügen über keine eigene Energiequelle. Sie beziehen ihre Energie zur Übertragung von Informationen aus den empfangenen Funkwellen. Passive Transponder verfügen im Vergleich zu den aktiven Transpondern über eine geringere Reichweite.

Die Schutzvorrichtung weist eine Aufnahmevorrichtung für einen NFC-Tag auf. Dabei kann die Aufnahmeeinrichtung auf verschiedene Weise ausgebildet sein. Einige bevorzugte Ausführungsformen hierzu werden im weiteren Verlauf der Beschreibung näher erläutert. Im bestimmungsgemäßen Gebrauch der Schutzvorrichtung ist der NFC-Tag in der Aufnahmevorrichtung der Schutzvorrichtung aufgenommen.

Weiterhin ist vorgesehen, dass die Aufnahmevorrichtung an einer definierten Position an/in der Schutzvorrichtung vorgesehen ist, Das bedeutet insbesondere, dass die Aufnahmevorrichtung an einer definierten Position an/in der Schutzvorrichtung angeordnet oder ausgebildet ist. Bei dieser definierten Position handelt es sich insbesondere um eine optimierte Montageposition. Bei der optimierten Montageposition handelt es sich um eine solche Position, bei der der NFC-Tag in Bezug auf das elektronische Endgerät, mit dem dieser in Verbindung gebracht wird, eine maximale Leistung beziehungsweise Performance erbringt. Grundsätzlich ist es möglich, dass es in Bezug auf ein elektronisches Endgerät mehr als eine optimierte Montageposition gibt. Die optimierte Montageposition, die zunächst in Bezug auf das elektronische Endgerät gilt, wird bevorzugt auf die Schutzvorrichtung übertragen, so dass auch an der Schutzvorrichtung erkennbar ist, wo sich die optimierte Montageposition für den NFC-Chip in Bezug auf das elektronische Endgerät, das mit der Schutzvorrichtung zusammenwirkt, befindet. Die optimierte Montageposition wird mittels des erfindungsgemäßen Verfahrens bestimmt, so dass an dieser Stelle auf die entsprechenden Ausführungen zum erfindungsgemäßen Verfahren vollinhaltlich Bezug genommen und verwiesen wird.

Erfindungsgemäß befindet sich diese definierte Position, das heißt die optimierte Montageposition, insbesondere an/in der Schutzvorrichtung an einer Stelle, bei der im Verbindungszustand der Schutzvorrichtung mit dem elektronischen Endgerät ein in der Aufnahmevorrichtung aufgenommener NFC-Tag in Beziehung zu dem elektronischen Endgerät eine maximale Signalstärke und/oder eine maximale Signalqualität und/oder ein maximales Signal/Rausch-Verhältnis aufweist.

Bei dem Verbindungszustand handelt es sich um den bestimmungsgemäßen Zustand der Schutzvorrichtung im Hinblick auf das elektronische Endgerät und den NFC-Tag. In diesem Verbindungszustand ist der NFC-Tag in der Aufnahmevorrichtung aufgenommen, und das elektronische Endgerät ist in der Schutzvorrichtung eingesetzt. Die einzelnen Komponenten des elektronischen Endgeräts, nämlich das elektronische Endgerät selbst, der NFC-Tag und die Schutzvorrichtung stehen im Verbindungszustand in Wechselwirkung, insbesondere in technologischer Wechselwirkung, zueinander. Dies gilt insbesondere für das elektronische Endgerät und den in der Schutzvorrichtung aufgenommenen NFC-Tag.

Es ist vorgesehen, dass der NFC-Tag über die Schutzvorrichtung in Bezug, da heißt insbesondere in technischer Wechselwirkung stehend, zu dem elektronischen Endgerät an einer Stelle platziert wird/ist, bei der es sich um die optimierte Montageposition handelt und an der insbesondere der in der Aufnahmevorrichtung aufgenommene NFC-Tag in Beziehung zu dem elektronischen Endgerät eine maximale Signalstärke und/oder eine maximale Signalqualität und/oder ein maximales Signal/Rausch-Verhältnis aufweist. Die Signalstärke gibt generell an, wie stark ein übertragener Signalpegel ist. Die Signalqualität sagt generell aus, wie gut das empfangene Signal ist. Das Signal-Rausch-Verhältnis ist generell das Maß für die Qualität eines Signals, welches von einem Rauschsignal überlagert ist. Das bedeutet, dass der NFC-Tag im bestimmungsgemäßen Gebrauch der Schutzvorrichtung, in dem das elektronische Endgerät in der Schutzvorrichtung aufgenommen ist, der NFC-Tag relativ zu einer Oberfläche des elektronischen Endgeräts angeordnet und/oder ausgerichtet ist.

Generell problematisch bei dem Zusammenwirken des elektronischen Endgeräts mit dem NFC-Tag ist, dass das elektronische Endgerät den NFC-Tag in dessen Funktion negativ beeinflussen kann. Dies kann durch die einzelnen Komponenten des elektronischen Endgeräts geschehen. Dieses Phänomen wird auch im Zusammenhang mit dem erfindungsgemäßen Verfahren weiter unten noch einmal in größerem Detail erörtert. Erfindungsgemäß wurde nunmehr herausgefunden, dass über die besondere Ausgestaltung der Schutzvorrichtung, insbesondere über die besondere Ausbildung der Aufnahmevorrichtung, ermöglicht wird, den NFC-Tag in Bezug auf das elektronische Endgerät an einer Stelle zu platzieren, wo eine negative Beeinflussung durch das elektronische Endgerät möglichst gering ist.

Bevorzugt ist die Aufnahmevorrichtung für den NFC-Tag der Schutzvorrichtung an einer definierten Position an/in der Schutzvorrichtung vorgesehen, derart, dass der NFC-Tag an/in einem Bereich des elektronischen Endgeräts vorgesehen ist, in welchem ein vom elektronischen Endgerät erzeugtes elektromagnetisches Feld, insbesondere ein von einer Antenne des elektronischen Endgeräts erzeugtes elektromagnetisches Feld, einen minimalen Wert aufweist. Einige Komponenten des elektronischen Endgeräts, beispielweise dessen Antenne, können ein magnetisches Feld erzeugen, das auf die einzelnen elektronischen Komponenten des NFC-Tags störend wirkt, so dass das elektromagnetische Feld des elektronischen Endgeräts die Komponenten des NFC-Tags negativ beeinflusst. Durch die besondere Ausgestaltung der Schutzvorrichtung wird es nunmehr möglich, dass der NFC-Tag im Verhältnis zu dem elektronischen Endgerät an einer Stelle platziert wird/ist, wo die elektromagnetische Störung durch das elektronische Endgerät am geringsten ist.

Die Aufnahmevorrichtung der Schutzvorrichtung kann auf unterschiedliche Weise ausgebildet sein. Nachfolgend werden einige bevorzugte Ausführungsbeispiele beschrieben, ohne dass die Erfindung auf diese konkreten Ausgestaltungen beschränkt wäre.

Gemäß einer ersten bevorzugten Ausführungsform ist die Aufnahmevorrichtung eine Aufnahmeöffnung, welche in der Schutzvorrichtung, insbesondere in der Rückwand der Schutzvorrichtung, ausgebildet ist. Dabei ist bevorzugt vorgesehen, dass die Aufnahmeöffnung eine an die Kontur des aufzunehmenden NFC-Tags angepasste Form aufweist. Gemäß diesem Ausführungsbeispiel hat die Schutzvorrichtung einen Ausschnitt, der insbesondere zur Form und Gestalt des aufzunehmenden beziehungsweise aufgenommenen NFC-Tags korrespondierend ausgebildet ist. Bei der Aufnahmeöffnung handelt es sich generell um eine offene Stelle in einer ansonsten geschlossenen Fläche, beispielsweise der Rückwand der Schutzvorrichtung.

Bevorzugt ist bei dieser Ausführungsform weiterhin vorgesehen, dass die Schutzvorrichtung im Bereich der Begrenzung der Aufnahmeöffnung eine Dicke aufweist, die größer oder gleich der Dicke des in die Aufnahmeöffnung einzusetzenden oder eingesetzten NFC-Tags ist. Das bedeutet, dass sich die Ränder der Aufnahmeöffnung auf gleicher Höhe wie die Oberfläche des von der Aufnahmevorrichtung aufgenommenen NFC-Tags befinden, oder aber sogar etwas darüber liegen.

Bei der vorgenannten Ausführungsform kann der NFC-Tag am elektronischen Endgerät befestigt werden oder sein. Die Schutzvorrichtung mit der Aufnahmeöffnung umgibt diesen. Damit ist der NFC-Tag zunächst geschützt. Zum anderen ist für den Nutzer ein eindeutiger Hinweis gegeben, wo der den NFC-Tag in Beziehung zu dem elektronischen Endgerät zu platzieren hat, damit die vorstehend beschriebenen positiven Wirkungen erzielt und die nachteiligen Wirkungen vermieden werden können. Denn der Nutzer hat nach dem Einsetzen des elektronischen Endgeräts in die Schutzvorrichtung nur die Möglichkeit, den NFC-Tag in die in der Schutzvorrichtung vorgesehene Aufnahmeöffnung einzusetzen. Die Schutzvorrichtung weist mit der Aufnahmeöffnung folglich ein Loch an der optimalen Stelle auf, wo der NFC-Tag in Bezug auf das in die Schutzvorrichtung eingesetzte elektronische Endgerät eingesetzt werden kann. Es sind somit herstellerseitig keine weiteren Instruktionen an den Nutzer erforderlich, um den Nutzer anzuleiten, den NFC-Tag an der geeigneten Stelle korrekt an dem elektronischen Endgerät anzuordnen.

Gemäß einer weiteren bevorzugten Ausführungsform ist die Aufnahmevorrichtung als konkave Vertiefung in der Schutzvorrichtung, insbesondere als konkave Vertiefung in der Rückwand der Schutzvorrichtung, ausgebildet. "Konkav" ist dabei insbesondere eine nach innen gerichtete Wölbung, insbesondere eine nach innen gerichtete gewölbte Oberfläche der der Schutzvorrichtung. Eine Vertiefung ist generell eine Absenkung oder Mulde in der Schutzvorrichtung. Damit ist bei der konkaven Vertiefung im Vergleich zu der Aufnahmeöffnung aus dem ersten Ausführungsbeispiel in der Schutzvorrichtung noch ein Boden vorhanden, der den NFC-Tag nach unten abdeckt. Der NFC-Tag wird somit nicht an dem elektronischen Endgerät selbst befestigt, sondern befindet sich in der Schutzvorrichtung. Bevorzugt ist die konkave Vertiefung durch einen durch die Schutzvorrichtung gebildeten Boden und eine durch die Schutzvorrichtung gebildete, von dem Boden abragende Seitenwandung gebildet.

In einer bevorzugten Ausführungsform steht der Boden im Vergleich zu der die konkave Vertiefung umgebenden Fläche der Schutzvorrichtung vor. Das bedeutet, dass sich der Boden im Vergleich zu der ihn umgebenden Fläche der Schutzvorrichtung über diese erhebt, und somit über dieser steht. Dadurch ist eine visuelle Möglichkeit für den Nutzer geschaffen, wo sich der NFC-Tag in der Schutzvorrichtung befindet, insbesondere dann, wenn der NFC-Tag an der Innenseite der Schutzvorrichtung, und damit zwischen Schutzvorrichtung und elektronischem Endgerät angeordnet und nach außen deshalb nicht sichtbar ist. Durch die besondere Ausgestaltung sieht der Nutzer, wo sich der NFC-Tag befindet, was die Handhabung in Bezug auf ein anderes Gerät, beispielsweise ein Lesegerät, vereinfacht.

Gemäß einer bevorzugten Alternative ist zur Fixierung eines in die konkave Vertiefung der Schutzvorrichtung eingesetzten NFC-Tags wenigstens eine Fixierlasche vorgesehen. Je nach Ausgestaltung kann die Fixierlasche in die konkave Vertiefung hineinragen oder diese überragen. Im Einbauzustand erstreckt sich die Fixierlasche über den NFC-Tag, so dass dieser in der konkaven Vertiefung, begrenzt durch den Boden, die Seitenwandung und die Fixierlasche eingeklemmt wird/ist. Bevorzugt sind zwei oder mehr Fixierlaschen vorgesehen, die auf sich gegenüber liegenden Seiten der konkaven Vertiefung angeordnet beziehungsweise ausgebildet sind.

Gemäß einer anderen bevorzugten Alternative weist die Seitenwandung der konkaven Vertiefung zur Fixierung eines in die konkave Vertiefung der Schutzvorrichtung eingesetzten NFC-Tags wenigstens eine Hinterschneidung auf. Bei einer Hinterschneidung weist die konkave Vertiefung eine oben beziehungsweise außen liegende erste Kontur auf. Eine darunter oder innen liegende zweite Kontur der konkaven Vertiefung ist größer als die außen liegende erste Kontur, so dass der NFC-Tag in die konkave Vertiefung eingedrückt wird und über die außen liegende erste Kontur der konkaven Vertiefung, die sich über die obere Oberfläche des NTC-Tags legt, eingeklemmt wird/ist.

Bevorzugt ist in weiterer Ausgestaltung, dass die konkave Vertiefung eine Tiefe aufweist, die größer oder gleich der Dicke des in die konkave Vertiefung einzusetzenden oder eingesetzten NFC-Tags ist.

Gemäß einer weiteren bevorzugten Ausgestaltung ist die Aufnahmevorrichtung als Aufnahmetasche ausgebildet. Diese Tasche erzeugt einen definierten Aufnahmeraum, in welchen der NFC-Tag hineingeschoben werden kann. Durch die entsprechende Platzierung der Tasche an der Schutzvorrichtung kann die optimale Stelle bereitgestellt werden, an der der NFC-Tag in Bezug auf das elektronische Endgerät zu platzieren ist.

Je nach Ausgestaltung der Schutzvorrichtung kann bevorzugt vorgesehen sein, dass die Aufnahmevorrichtung an der Innenseite oder der Außenseite der Schutzvorrichtung vorgesehen ist. Besteht die Schutzvorrichtung aus einer Rückwand und einer durch das wenigstens eine Rahmenelement gebildeten Seitenwandung, kann die Aufnahmevorrichtung an deren Innenseite oder Außenseite vorgesehen sein. Es existieren allerdings auch Schutzvorrichtungen, beispielsweise so genannte Wallet-Cases, die neben den zuvor genannten Seiten noch eine klappbare Frontseite in Form eines Deckels aufweisen. Dieser Deckel dient insbesondere zum Schutz des in der Schutzvorrichtung befindlichen elektronischen Endgeräts, beispielsweise von dessen Display. Bei Verwendung einer solchen Frontseite kann die Aufnahmevorrichtung auch an deren Innenseite oder Außenseite vorgesehen sein.

Möglich ist beispielsweise die Anordnung des NFC-Tags zwischen der Schutzvorrichtung und der Rückseite des elektronischen Endgeräts, oder eine Anordnung auf einer vom elektronischen Endgerät abgewandten Seite der Schutzvorrichtung. Bevorzugt kann eine Positionierung der Aufnahmevorrichtung entlang einer Längsachse oder Querachse des elektronischen Endgeräts erfolgen. In weiter bevorzugter Ausgestaltung kann die Aufnahmevorrichtung mit ihrem Aufnahmebereich für den NFC-Tag innen oder außen bezogen auf die Rückseite der Schutzvorrichtung vorgesehen sein.

Die vorliegende Erfindung ist nicht auf bestimmte Konturen für die Aufnahmevorrichtung beschränkt. Beispielsweise kann die Aufnahmevorrichtung quadratisch oder rechteckig oder auch rund ausgebildet sein.

Bevorzugt ist ferner, wenn die Aufnahmevorrichtung verschiebbar in wenigstens einer Schieberrichtung an/in der Schutzvorrichtung angeordnet oder ausgebildet ist. Das hat insbesondere den Vorteil, dass ein und dieselbe Schutzvorrichtung für verschiedene Typen von elektronischen Endgeräten verwendet werden kann. Die Aufnahmevorrichtung kann dann je nach Gerätetyp stets in die optimale Position gebracht werden, um die erfindungsgemäßen Effekte zu erzielen.

In weiterer Ausgestaltung kann die Aufnahmevorrichtung bevorzugt lösbar an der Schutzvorrichtung angeordnet sein, was eine Wiederverwendbarkeit der Aufnahmevorrichtung unabhängig von der Schutzvorrichtung ermöglicht.

Bevorzugt kann die Schutzvorrichtung aus einem flexiblen oder semi-flexiblen Material, insbesondere aus Silikon, Kautschuk oder Kunststoff, bestehen.

Die Schutzvorrichtung dient insbesondere dazu, dass das darin eingesetzte elektronische Endgerät eine gleichmäßige, individuelle und gegebenenfalls personalisierte Erscheinung hat, auch dann, wenn daran ein NFC-Tag angeordnet wird. Durch den an/in der Schutzvorrichtung aufgenommenen NFC-Tag wird dieser wirksam geschützt, etwa wenn das mit der Schutzvorrichtung versehene elektronische Endgerät auf einer Unterlage abgelegt oder in eine Tasche hineingesteckt oder aus dieser herausgezogen wird. Dabei wird insbesondere sichergestellt, dass der NFC-Tag nicht beschädigt wird, oder dass sich dieser ungewollt vom elektronischen Endgerät ablöst. Durch die besondere Ausgestaltung der Schutzvorrichtung kann, wenn die Aufnahmevorrichtung als Aufnahmeöffnung ausgebildet ist, seitens des Nutzers problemlos die optimale Stelle lokalisiert werden, an der der NFC-Tag an dem elektronischen Endgerät zu befestigen ist. In anderen Fällen, in denen der NFC-Tag an/in der Schutzvorrichtung befestigt wird, befindet sich dieser nach dem Einsetzen automatisch an der optimalen Stelle. Durch die besondere Ausgestaltung der Aufnahmevorrichtung wird wirksam verhindert, dass der NFC-Tag, insbesondere dessen Kanten und/oder freie Oberfläche, beschädigt wird/werden. Der Nutzer eines NFC-Tags muss sich keine Gedanken mehr machen, wo der NFC-Tags geeigneter Weise am elektronischen Endgerät angebracht werden muss, da die Aufnahmevorrichtung der Schutzvorrichtung die geeignete Stele vorgibt. Das erhöht die Akzeptanz zur Nutzung solcher NFC-Tags.

Wie oben schon ausgeführt wurde, tritt bei elektronischen Endgeräten mit metallischen Körpern oder Gehäusen der Fall auf, dass der NFC-Tag, wenn er direkt auf der Rückseite des elektronischen Endgeräts platziert wird, eine schlechte Performance beziehungsweise Leistung hat, und dass er im schlechtesten Fall überhaupt nicht funktioniert. Wenn der Nutzer das elektronische Endgerät beispielsweise im Zusammenhang mit einem NFC-Lesegerät verwendet, beispielsweise während eines Bezahlvorgangs, muss der Nutzer sein elektronisches Endgerät häufig vor dem NFC-Lesegerät hin- und her bewegen, bis eine Verbindung zustande kommt, wenn überhaupt. Der Grund hierfür liegt insbesondere darin, dass das Metall die Stärke des Nahfeldes des NFC-Tags signifikant reduziert.

Bevorzugt kann deshalb vorgesehen sein, dass die weiter oben beschriebene Schutzvorrichtung derart ausgebildet ist, dass der NFC-Tag in Bezug auf das elektronische Endgerät beabstandet ist, beispielsweise, dass zwischen dem NFC-Tag und dem elektronischen Endgerät ein Spalt, insbesondere ein Spalt von einigen Millimetern vorgesehen ist. Bevorzugt kann dieser Spalt mit einem magnetischen Isolator, beispielsweise einer Ferrit-Folie, ausgefüllt sein.

Generell performt ein NFC-Tag auch bei elektronischen Endgeräten mit nicht-metallischen Körpern oder Gehäusen unterschiedlich, was insbesondere von der Position und der Orientierung abhängt, an/mit der der NFC-Tag auf der Rückseite des elektronischen Endgeräts montiert wird/ist. Der NFC-Tag funktioniert dort am besten, wo die Positionierung und Orientierung, wie weiter oben ausgeführt ist, möglichst frei von metallischen Induktionseffekten ist, das heißt, möglichst weit entfernt von metallischen Komponenten und Strukturen ist.

Die Erfindung wird nun anhand von Ausführungsbeispielen unter Bezugnahme auf die beiliegenden Zeichnungen in größerem Detail beschrieben. Es zeigen
- Figur 1: eine aus dem Stand der Technik bekannte Schutzvorrichtung für ein elektronisches Endgerät;
- Figur 2: die in Figur 1 dargestellte Schutzvorrichtung mit eingesetztem elektronischem Endgerät;
- Figur 3: ein erstes Ausführungsbeispiel einer Schutzvorrichtung;
- Figuren 4 und 5: ein zweites Ausführungsbeispiel einer Schutzvorrichtung;
- Figuren 6 und 7: ein drittes Ausführungsbeispiel einer Schutzvorrichtung;
- Figur 8: ein viertes Ausführungsbeispiel einer Schutzvorrichtung;
- Figur 9: verschiedene Positionen und Orientierungen eines NFC-Tags, die mit dem erfindungsgemäßen Verfahren getestet wurden; und
- Figur 10: eine aus dem erfindungsgemäßen Verfahren resultierende Ergebnisdatei.

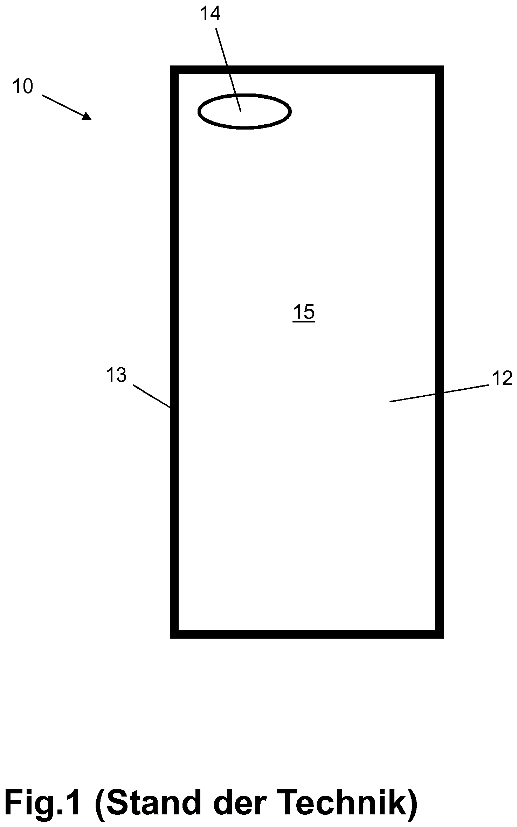

In den Figuren 1 bis 8 ist eine Schutzvorrichtung 10 für ein elektronisches Endgerät 11 dargestellt. Bei der Schutzvorrichtung 10 handelt es sich um eine Schutzschale, bei dem elektronischen Endgerät 11 handelt es sich um ein Mobiltelefon in Form eines Smartphones,

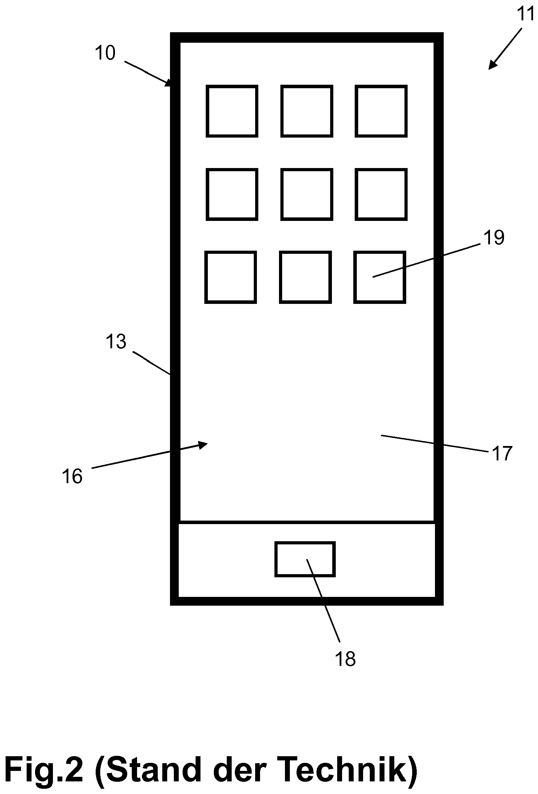

Bei der in Figur 1 dargestellten Schutzvorrichtung 11 handelt es sich um eine aus dem Stand der Technik bekannte Lösung. Die Schutzvorrichtung weist zunächst eine Rückwand 12 auf, die im bestimmungsgemäßen Gebrauch der Schutzvorrichtung 10, der in Figur 2 dargestellt ist, mit einer Rückseite des elektronischen Endgeräts 11 in Kontakt kommt. An den Seitenrändern der Rückwand 12 ist wenigstens ein von der Rückwand 12 nach oben abragendes Rahmenelement 13 vorgesehen. Im dargestellten Beispiel, ebenso wie in allen folgenden erfindungsgemäßen Ausführungsbeispielen ist das Rahmenelement 13 als ein einziges umlaufendes, durchgängiges Rahmenelement 13 ausgebildet. Über die Rückwand 12 wird die Rückseite des elektronischen Endgeräts 11 geschützt, während über das Rahmenelement 13 die Seitenränder des elektronischen Endgeräts 11 geschützt werden. In der Rückwand 12 der Schutzvorrichtung 10 befindet sich ein Ausschnitt 14, der mit einer Kamera des in die Schutzvorrichtung 10 eingesetzten elektronischen Endgeräts 11 zusammenwirkt.

Die Rückwand 12 und das Rahmenelement 13 begrenzen einen Aufnahmeraum 15 der Schutzvorrichtung 10, in welchen das elektronische Endgerät 11 eingesetzt werden kann. Dies ist in Figur 2 gezeigt. In Figur 2 ist das elektronische Endgerät 11 in die Schutzvorrichtung 10 eingesetzt. Das Rahmenelement 13 schützt dabei die Seitenränder des elektronischen Endgeräts 11, während die Unterseite des elektronischen Endgeräts 11 durch die Rückwand 12 der Schutzvorrichtung10 (nicht dargestellt) geschützt wird.

Ungeschützt ist bei dieser Ausgestaltung lediglich die Vorderseite 16 des elektronischen Endgeräts 11 mit Display 17, Bedienknopf 18 und Touch-Feldern 19.

Die Schutzvorrichtung 10 besteht aus einem flexiblen oder semi-flexiblen material, beispielsweise aus Silikon. Kautschuk oder Kunststoff.

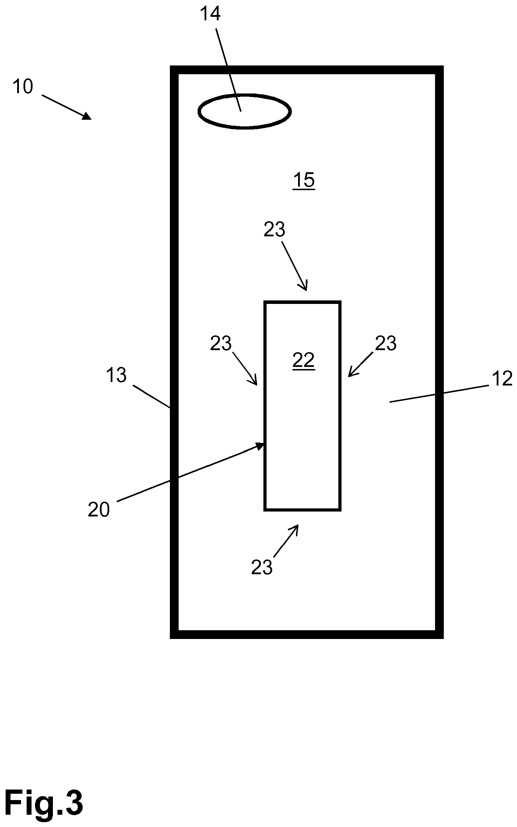

Nachfolgend werden anhand der Figuren 3 bis 8 verschiedene vorteilhafte Ausführungsbeispiele für Schutzvorrichtungen 10 beschrieben. Dabei entsprechen die Schutzvorrichtungen 10 von ihrem Grundaufbau her der in Figur 1 gezeigten Schutzvorrichtung 10, so dass hinsichtlich deren Aufbaus auf die Beschreibung zu Figur 1 verwiesen wird.

Allen Ausführungsbeispielen ist dabei gemeinsam, dass die Schutzvorrichtung 10 eine Aufnahmevorrichtung 20 für einen NFC-Tag 21 aufweist, und dass die Aufnahmevorrichtung 20 an einer definierten Position an/in der Schutzvorrichtung 10 vorgesehen ist, derart, dass im Verbindungszustand der Schutzvorrichtung 10 mit dem elektronischen Endgerät 11 (wie aus Figur 2 ersichtlich), ein in der Aufnahmevorrichtung 20 aufgenommener NFC-Tag 21 in Beziehung zu dem elektronischen Endgerät 11 eine maximale Signalstärke und/oder eine maximale Signalqualität und/oder ein maximales Signal/Rausch-Verhältnis aufweist.

In Figur 3 ist ein erstes Ausführungsbeispiel einer Schutzvorrichtung 10 dargestellt. Bei diesem Ausführungsbeispiel ist die Aufnahmevorrichtung 20 eine Aufnahmeöffnung 22, welche in der Rückwand 12 der Schutzvorrichtung 10 ausgebildet ist. Dabei ist vorgesehen, dass die Aufnahmeöffnung 22 eine an die Kontur des aufzunehmenden NFC-Tags angepasste Form aufweist. Bei dieser Ausführungsform ist weiterhin vorgesehen, dass die Schutzvorrichtung 10 im Bereich der Begrenzung 23 der Aufnahmeöffnung 22 eine Dicke aufweist, die größer oder gleich der Dicke des in die Aufnahmeöffnung 22 einzusetzenden oder eingesetzten NFC-Tags ist.

Bei dem in Figur 3 dargestellten Ausführungsbeispiel kann der NFC-Tag (nicht dargestellt) am elektronischen Endgerät (nicht dargestellt) befestigt werden oder sein. Die Schutzvorrichtung 10 mit der Aufnahmeöffnung 22 umgibt diesen. Damit ist der NFC-Tag zunächst geschützt. Zum anderen ist für den Nutzer ein eindeutiger Hinweis gegeben, wo der den NFC-Tag in Beziehung zu dem elektronischen Endgerät zu platzieren hat. Denn der Nutzer hat nach dem Einsetzen des elektronischen Endgeräts in die Schutzvorrichtung 10 nur die Möglichkeit, den NFC-Tag in die in der Schutzvorrichtung 10 vorgesehene Aufnahmeöffnung 22 einzusetzen.

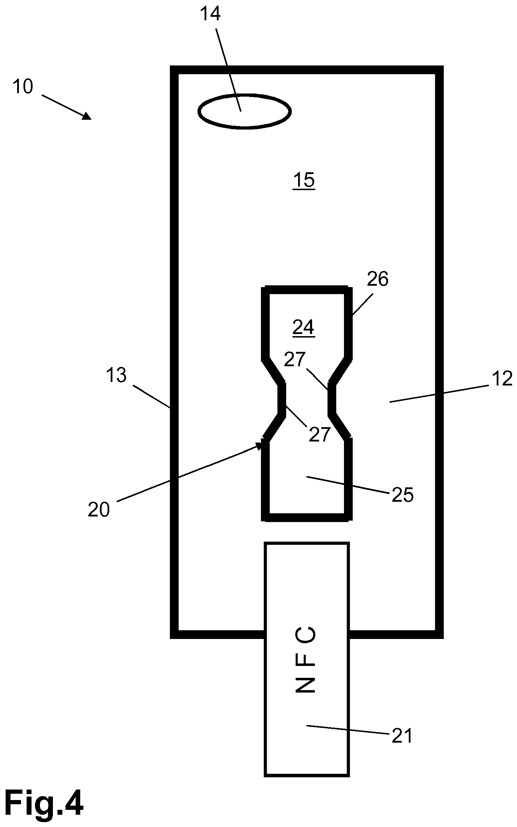

In den Figuren 4 bis 7 sind weitere bevorzugte Ausführungsbeispiele einer Schutzvorrichtung 10 beschrieben. Bei diesen Ausführungsbeispielen ist die Aufnahmevorrichtung 20 als konkave Vertiefung 24 in der Rückwand 12 der Schutzvorrichtung 10 ausgebildet. Damit ist bei der konkaven Vertiefung 24 im Vergleich zu der Aufnahmeöffnung 22 aus dem in Figur 3 dargestellten Ausführungsbeispiel in der Schutzvorrichtung 10 noch ein Boden 25 vorhanden, der den NFC-Tag 21 nach unten abdeckt. Der NFC-Tag 21 wird somit nicht an dem elektronischen Endgerät selbst befestigt, sondern befindet sich in der Schutzvorrichtung 10. Dabei ist die konkave Vertiefung 24 durch den durch die Schutzvorrichtung10 gebildeten Boden 25 und eine durch die Schutzvorrichtung gebildete 10, von dem Boden 25 abragende Seitenwandung 26 gebildet.

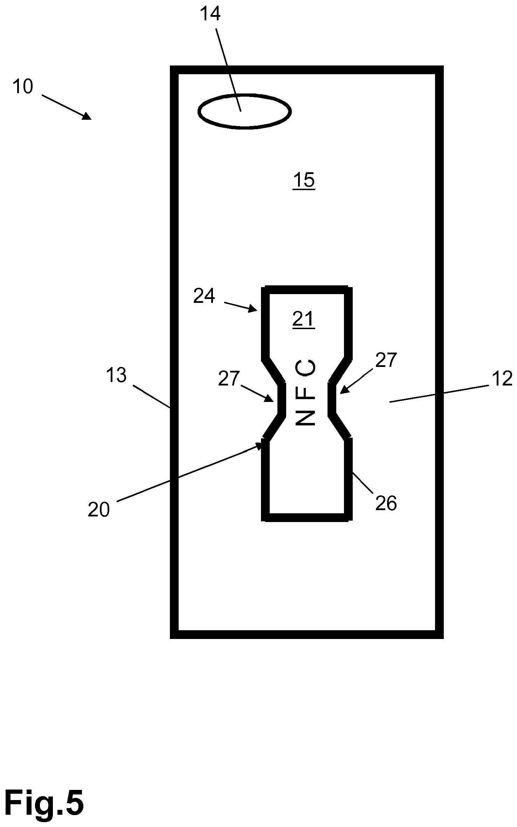

Gemäß einer bevorzugten Alternative, die in den Figuren 4 und 5 dargestellt ist, sind zur Fixierung des in die konkave Vertiefung 24 der Schutzvorrichtung 10 eingesetzten NFC-Tags 21 zwei Fixierlaschen 27 vorgesehen. Im Einbauzustand gemäß Figur 5 erstrecken sich die Fixierlaschen 27 über den NFC-Tag 21, so dass dieser in der konkaven Vertiefung 24, begrenzt durch den Boden 25, die Seitenwandung 26 und die Fixierlaschen 27 eingeklemmt wird/ist.

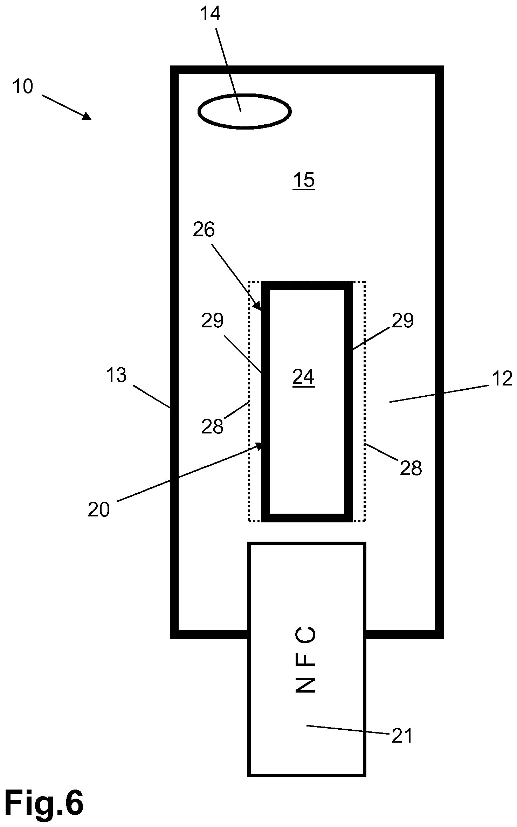

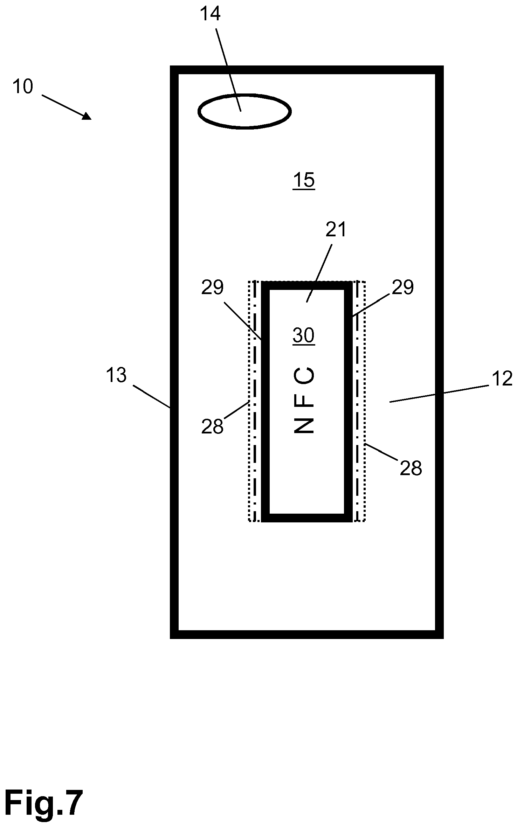

Gemäß einer anderen bevorzugten Alternative, die in den Figuren 6 und 7 dargestellt ist, weist die Seitenwandung 26 der konkaven Vertiefung 24 zur Fixierung eines in die konkave Vertiefung 24 der Schutzvorrichtung 10 eingesetzten NFC-Tags 21 wenigstens eine Hinterschneidung 28 auf. Die Hinterschneidung 28, die von außen nicht sichtbar ist, ist in den Figuren 6 und 7 als gestrichelte Linie dargestellt. Bei der Hinterschneidung 28 weist die konkave Vertiefung 24 eine oben beziehungsweise außen liegende erste Kontur 29 auf. Eine darunter oder innen liegende zweite Kontur der konkaven Vertiefung 24, die die als gestrichelte Linie dargestellte Hinterschneidung 28 bildet, ist größer als die außen liegende erste Kontur 29, so dass der NFC-Tag 21 in die konkave Vertiefung 24 eingedrückt wird und über die außen liegende erste Kontur 29 der konkaven Vertiefung 24, die sich über die obere Oberfläche 30 des NFC-Tags 21 legt, eingeklemmt wird/ist. Zur Verdeutlichung sind in Figur 7 die unter der ersten Kontur 29 der konkaven Vertiefung 24 liegenden Seitenränder des NFC-Tags 21, die von außen nicht sichtbar sind, als strichpunktierte Linien dargestellt.

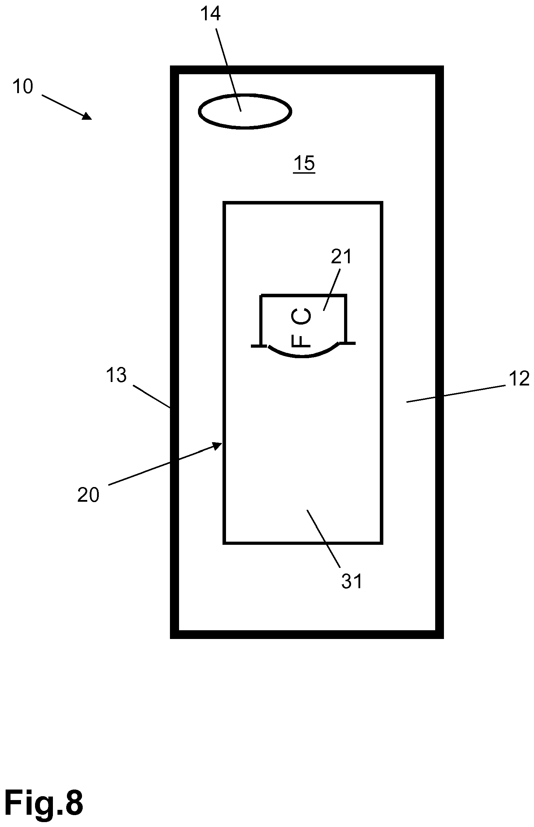

Gemäß einem weiteren bevorzugten Ausführungsbeispiel, das in Figur 8 dargestellt ist, ist die Aufnahmevorrichtung 20 als Aufnahmetasche 31 ausgebildet. Diese Aufnahnetasche 31, die an der Rückwand 12 der Schutzvorrichtung 10 befestigt ist, erzeugt einen definierten Aufnahmeraum, in welchen der NFC-Tag 21 hineingeschoben werden kann. Durch die entsprechende Platzierung der Tasche 31 an der Rückwand 12 der Schutzvorrichtung 10 kann die optimale Stelle bereitgestellt werden, an der der NFC-Tag 21in Bezug auf das elektronische Endgerät (nicht dargestellt) zu platzieren ist.

Das Grundkonzept der vorliegenden Erfindung besteht darin, dass nunmehr die Schutzvorrichtung 10, die ein sehr häufig verwendetes Accessoire für das elektronische Endgerät 11 ist, genutzt wird, um den NFC Tag 21 optimal und sicher zu platzieren.

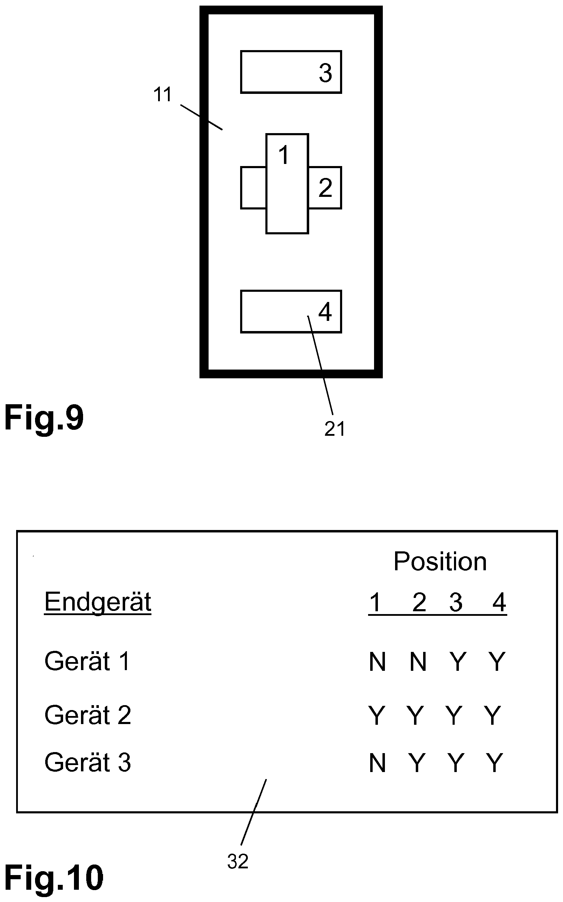

Im Zusammenhang mit den Figuren 9 und 10 wird nun das erfindungsgemäße Verfahren zur Optimierung einer Montageposition eines NFC-Tags 21 in Bezug auf ein elektronisches Endgerät 11 beschrieben. Die dabei gewonnenen Erkenntnisse können verwendet werden, die Schutzvorrichtung für das elektronische Endgerät in einer Weise auszugestalten, dass sich, wenn der NFC-Tag in der Schutzvorrichtung angeordnet ist, der NFC-Tag in der optimierten Montageposition befindet.

Dazu werden in dem Ausführungsbeispiel zu Anschauungszwecken vier verschiedene Positionen und Orientierungen des NFC-Tags 21 getestet, die in Figur 9 mit den Nummern 1 bis 4 versehen sind. Dabei ist die Erfindung natürlich nicht auf die genannte Anzahl beschränkt. Die Durchführung des Verfahrens erfolgt bevorzugt in einer Laborumgebung.

Zur Durchführung des Verfahrens steuert eine Steuereinrichtung einer Handhabungseinrichtung (nicht dargestellt), bei der es sich beispielsweise um einen Roboterarm handelt, an der/dem ein NFC-Tag 21 angeordnet ist, die Handhabungseinrichtung derart an, dass dieser nun in verschiedene Positionen und Orientierungen 1, 2, 3, 4 in Bezug auf das elektronische Endgerät 11 verfahren. Das Verfahren zur Optimierung der Montageposition ist dabei in Form der Sprache eines Algorithmus wie folgt implementiert:
N wird als die Anzahl der Testläufe definiert, um Testergebnisse mit statistischer Signifikanz zu erzielen. P wird als die Anzahl der NFC-Tag Kombinationen der Positionen (beispielsweise oben, mittig, unten), der Orientierungen (beispielsweise horizontal, das heißt quer zur vertikalen Achse des elektronischen Endgeräts oder vertikal, das heißt entlang der vertikalen Achse des elektronischen Endgeräts), und der Spaltbreite (zum Beispiel null mm, wenn der NFC-Tag direkt auf der Rückseite des elektronischen Endgeräts angeordnet ist oder wenn ein Abstand von einigen mm vorhanden ist), definiert. Q wird als die Anzahl der verschiedenen Möglichkeiten definiert, wie ein elektronisches Endgerät gehandhabt wird, beispielsweise wie es gegriffen, aufgenommen wird und dergleichen, und wie sich ein elektronisches Endgerät einem NFC-Lesegerät nähert, zum Beispiel die Winkbewegung, die Geschwindigkeit und der Abstand zum NFC-Lesegerät. T wird als die Anzahl der verschiedenen NFC-Lesegeräte definiert, gegen die das elektronische Endgerät 11 mit dem NFC-Tag 21 getestet wird.

Der Ablauf des Verfahrens sieht nun wie folgt aus: Für jedes t NFC-Lesegerät Modell (T) wird folgendes ermittelt: Für jede q Möglichkeit, das elektronische Endgerät mit dem NFC-Tag (Q) zu handhaben und sich dem NFC-Lesegerät zu nähern wird jede p Kombination der NFC-Tag Position, der Orientierung und falls erforderlich der Spaltbreite (P) ermittelt. Das Ganze wird N mal, beispielsweise 3 mal, wiederholt. Dabei kann folgendes ermittelt werden:
Bei einer erfolgreichen Durchführung des Verfahrens wird beispielsweise festgehalten: #Versuche, #Läufe, p, q, t, "OK".
Bei einer erfolglosen Durchführung des Verfahrens nach erfolglosen drei Durchführungen wird festgehalten: 4, #Läufe, p, q, t, "Fehlgeschlagen".

Die durch das Verfahren zur Optimierung der Montageposition ermittelten Resultate können in einer Ergebnisdatei 32 aufgenommen und abgespeichert werden, wie sie in Figur 10 dargestellt ist. In Figur 10 sind solche Resultate, die erfolgreich verlaufen sind, mit einem "Y" markiert, während erfolglos verlaufene Resultate mit einem "N" markiert sind.

### Bezugszeichenliste

- 10: Schutzvorrichtung (Schutzschale)
- 11: Elektronisches Endgerät (Smartphone)
- 12: Rückwand
- 13: Rahmenelement
- 14: Ausschnitt für Kamera
- 15: Aufnahmeraum
- 16: Vorderseite des elektronischen Endgeräts
- 17: Display
- 18: Bedienknopf
- 19: Touch-Feld
- 20: Aufnahmevorrichtung
- 21: NFC-Tag
- 22: Aufnahmeöffnung
- 23: Begrenzung der Aufnahmeöffnung
- 24: Konkave Vertiefung
- 25: Boden
- 26: Seitenwandung
- 27: Fixierlasche
- 28: Hinterschneidung (innen liegende zweite Kontur)
- 29: Außen liegende erste Kontur
- 30: Obere Oberfläche des NFC-Tags
- 31: Aufnahmetasche
- 32: Ergebnisdatei

### Bezugszeichenliste

- 10: Schutzvorrichtung (Schutzschale)
- 11: Elektronisches Endgerät (Smartphone)
- 12: Rückwand
- 13: Rahmenelement
- 14: Ausschnitt für Kamera
- 15: Aufnahmeraum
- 16: Vorderseite des elektronischen Endgeräts
- 17: Display
- 18: Bedienknopf
- 19: Touch-Feld
- 20: Aufnahmevorrichtung
- 21: NFC-Tag
- 22: Aufnahmeöffnung
- 23: Begrenzung der Aufnahmeöffnung
- 24: Konkave Vertiefung
- 25: Boden
- 26: Seitenwandung
- 27: Fixierlasche
- 28: Hinterschneidung (innen liegende zweite Kontur)
- 29: Außen liegende erste Kontur
- 30: Obere Oberfläche des NFC-Tags
- 31: Aufnahmetasche
- 32: Ergebnisdatei

## Patentansprüche

1. Verfahren zur Optimierung einer Montageposition eines NFC-Tags, bei der der NFC-Tag eine maximale Signalstärke und/oder eine maximale Signalqualität und/oder ein maximales Signal/Rausch-Verhältnis erbringt, in einem elektronischen Endgerät in Form eines Mobiltelefons, Smartphones oder Tablet-Geräts, mit einer Schutzvorrichtung (10), die eine Rückwand (12) und wenigstens ein Rahmenelement (13) aufweist, wobei die Rückwand (12) und das Rahmenelement (13) einen Aufnahmeraum (15) begrenzen, in welchem das elektronische Endgerät (11) eingesetzt ist, und mit einem NFC-Tag (21), wobei die Schutzvorrichtung (10) eine Aufnahmevorrichtung (20), in der der NFC-Tag (21) aufgenommen ist, aufweist, und dass die Aufnahmevorrichtung (20) an einer definierten Position an/in der Schutzvorrichtung (10) angeordnet oder ausgebildet ist, derart, dass der in der Aufnahmevorrichtung (20) aufgenommene NFC-Tag (21) in Beziehung zu dem elektronischen Endgerät (11) in der Schutzvorrichtung eine optimierte Montageposition, bei der der NFC-Tag (21) eine maximale Signalstärke und/oder eine maximale Signalqualität und/oder ein maximales Signal/Rausch-Verhältnis erbringt, aufweist, wobei das Verfahren durch folgende Schritte gekennzeichnet ist:
a) Positionieren des NFC-Tags an dem elektronischen Endgerät;
b) Initiieren einer NFC-Kommunikation mit einem NFC-Lesegerät;
c) Bestimmen ob die Kommunikation erfolgreich war;
d) wobei die Schritte a) bis c) bezüglich einer Variation wenigstens eines der folgenden Parameter durchgeführt werden
o Eine Position des NFC-Tags bezüglich des elektronischen Endgeräts;
o Eine Orientierung des NFC-Tags bezüglich des elektronischen Endgeräts;
o Einen Abstand des NFC-Tags vom elektronischen Endgerät;
o Eine Annäherung des NFC-Tags an das NFC-Lesegerät;
o Eine Bauart des NFC-Lesegeräts.
e) Bestimmen von wenigstens einer Position, an der die Kommunikation erfolgreich war.

2. Verfahren nach Anspruch 1, **dadurch gekennzeichnet, dass** zum Bestimmen von wenigstens einer Position, an der die Kommunikation erfolgreich war, die Schritte a) bis c) unter Variation eines Parameters in zwei oder mehr Durchgängen durchgeführt werden.

3. Verfahren nach Anspruch 1 oder 2, **dadurch gekennzeichnet, dass** die Position, an der die Kommunikation erfolgreich war, in einer Ergebnisdatei abgespeichert wird.

4. Verfahren nach einem der Ansprüche 1 bis 3, **dadurch gekennzeichnet, dass** das Verfahren durchgeführt wird zum Optimieren der Montageposition des NFC-Tags (21) in dem elektronischen Endgerät (11) mit der Schutzvorrichtung (10), wobei die Aufnahmevorrichtung (20) der Schutzvorrichtung (10) eine Aufnahmeöffnung (22) ist, welche in der Schutzvorrichtung (10), insbesondere in der Rückwand (12) der Schutzvorrichtung (10), ausgebildet ist, wobei die Aufnahmeöffnung (22) insbesondere eine an die Kontur des aufzunehmenden NFC-Tags (21) angepasste Form aufweist und wobei insbesondere die Schutzvorrichtung (10) im Bereich der Begrenzung (23) der Aufnahmeöffnung (22) eine Dicke aufweist, die größer oder gleich der Dicke des in die Aufnahmeöffnung (22) einzusetzenden oder eingesetzten NFC-Tags (21) ist.

5. Verfahren nach einem der Ansprüche 1 bis 3, **dadurch gekennzeichnet, dass** das Verfahren durchgeführt wird zum Optimieren der Montageposition des NFC-Tags (21) in dem elektronischen Endgerät (11) mit der Schutzvorrichtung (10), wobei die Aufnahmevorrichtung (20) der Schutzvorrichtung (10) als konkave Vertiefung (24) in der Schutzvorrichtung (10), insbesondere als konkave Vertiefung (24) in der Rückwand (12) der Schutzvorrichtung (10), ausgebildet ist.

6. Verfahren nach Anspruch 5, **dadurch gekennzeichnet, dass** das Verfahren durchgeführt wird zum Optimieren der Montageposition des NFC-Tags (21) in dem elektronischen Endgerät (11) mit der Schutzvorrichtung (10), wobei die konkave Vertiefung (24) durch einen durch die Schutzvorrichtung (10) gebildeten Boden (25) und eine durch die Schutzvorrichtung (10) gebildete, von dem Boden (25) abragende Seitenwandung (26) gebildet ist. Und wobei insbesondere der Boden (25) im Vergleich zu der die konkave Vertiefung (24) umgebenden Fläche der Schutzvorrichtung (10) vorsteht.

7. Verfahren nach einem der Ansprüche 5 oder 6, **dadurch gekennzeichnet, dass** das Verfahren durchgeführt wird zum Optimieren der Montageposition des NFC-Tags (21) in dem elektronischen Endgerät (11) mit der Schutzvorrichtung (10), wobei zur Fixierung eines in die konkave Vertiefung (24) der Schutzvorrichtung (10) eingesetzten NFC-Tags (21) wenigstens eine Fixierlasche (27) vorgesehen ist, oder wobei die Seitenwandung (26) der konkaven Vertiefung (24) zur Fixierung eines in die konkave Vertiefung (24) der Schutzvorrichtung (10) eingesetzten NFC-Tags (21) wenigstens eine Hinterschneidung (28) aufweist..

8. Verfahren nach einem der Ansprüche 5 bis 7, **dadurch gekennzeichnet, dass** das Verfahren durchgeführt wird zum Optimieren der Montageposition des NFC-Tags (21) in dem elektronischen Endgerät (11) mit der Schutzvorrichtung (10), wobei die konkave Vertiefung (24) eine Tiefe aufweist, die größer oder gleich der Dicke des in die konkave Vertiefung (24) einzusetzenden oder eingesetzten NFC-Tags (21) ist.

9. Verfahren nach einem der Ansprüche 1 bis 3, **dadurch gekennzeichnet, dass** das Verfahren durchgeführt wird zum Optimieren der Montageposition des NFC-Tags (21) in dem elektronischen Endgerät (11) mit der Schutzvorrichtung (10), wobei die Aufnahmevorrichtung (20) der Schutzvorrichtung (10) als Aufnahmetasche (31) ausgebildet ist.

10. Verfahren nach einem der Ansprüche 1 bis 3 oder 5 bis 9, **dadurch gekennzeichnet, dass** das Verfahren durchgeführt wird zum Optimieren der Montageposition des NFC-Tags (21) in dem elektronischen Endgerät (11) mit der Schutzvorrichtung (10), wobei die Aufnahmevorrichtung (20) der Schutzvorrichtung (10) an der Innenseite oder der Außenseite der Schutzvorrichtung (10) vorgesehen ist.

11. Verfahren nach einem der Ansprüche 1 bis 10, **dadurch gekennzeichnet, dass** der NFC-Tag (21) als NFC-Chip oder NFC-Sticker ausgebildet ist.

## Claims

1. A method for optimizing a mounting position of an NFC tag, where the NFC tag has a maximum signal strength and/or a maximum signal quality and/or a maximum signal/noise ratio, in an electronic terminal in form of a mobile phone, a smartphone or a tablet-device, with a protective device (10) which has a rear wall (12) and at least one frame element (13), the rear wall (12) and the frame element (13) delimiting a receiving space (15), in which the electronic terminal (11) is inserted, and with an NFC tag (21), wherein the protective device (10) comprises a receiving device (20), in which the NFC tag (21) is received, and that the receiving device (20) is arranged or provided at a defined position on/in the protective device (10), such that the NFC tag (21) accommodated in the receiving device (20) has an optimized mounting position in relation to the electronic terminal (11), in which the NFC tag (21) has a maximum signal strength and/or a maximum signal quality and/or a maximum signal/noise ratio,
wherein the method is **characterized by** the following steps:
a) positioning the NFC tag on the electronic terminal;
b) initiating an NFC communication with an NFC reader;
c) determining, whether the communication was successful;
d) wherein steps a) to c) are carried out with respect to a variation of at least one of the following parameters
o a position of the NFC tag in relation to the electronic terminal;
o an orientation of the NFC tag in relation to the electronic terminal;
o a distance of the NFC tag from the electronic terminal;
o an approximation of the NFC tag to the NFC reader;
o a type of NFC reader.
e) determining at least one position, where communication was successful.

2. The method according to claim 1, **characterized in that** to determine at least one position, at which the communication was successful, steps a) to c) are carried out in two or more runs while varying a parameter.

3. The method according to Claim 1 or 2, **characterized in that** the position, at which the communication was successful, is stored in a result data file.

4. The method according to anyone of claims 1 to 3, **characterized in that** the method is carried out for optimizing the mounting position of the NFC tag (21) in the electronic terminal (11) with the protective device (10), wherein the receiving device (20) of the protective device (10) is a receiving opening (22) which is provided in the protective device (10), in particular in the rear wall (12) of the protective device (10), wherein the receiving opening (22) has in particular a shape adapted to the contour of the NFC tag (21) to be received, and wherein, in particular, the protective device (10) has a thickness in the region of the boundary (23) of the receiving opening (22) which is greater than or equal to the thickness of the NFC tag (21) being inserted or to being inserted into the receiving opening (22).

5. The method according to anyone of claims 1 to 3, **characterized in that** the method is carried out for optimizing the mounting position of the NFC tag (21) in the electronic terminal (11) with the protective device (10), the receiving device (20) of the protective device (10) is designed as a concave depression (24) in the protective device (10), in particular as a concave depression (24) in the rear wall (12) of the protective device (10).

6. The method according to claim 5, **characterized in that** the method is carried out for optimizing the mounting position of the NFC tag (21) in the electronic terminal (11) with the protective device (10), wherein the concave depression (24) is formed by a bottom (25) formed by the protective device (10) and by a side wall (26) formed by the protective device (10) and protruding from the bottom (25), and wherein, in particular, the bottom (25) protrudes in comparison to the surface of the protective device (10) surrounding the concave depression (24).

7. The method according to anyone of claims 5 or 6, **characterized in that** the method is carried out for optimizing the mounting position of the NFC tag (21) in the electronic terminal (11) with the protective device (10), wherein, in order to fix an NFC tag (21) inserted into the concave depression (24) of the protective device (10), at least one fixing bar(27) is provided, or wherein the side wall (26) of the concave depression (24) comprises at least one undercut (28) for fixing an NFC tag (21) inserted into the concave depression (24) of the protective device (10).

8. The method according to anyone of claims 5 to 7, **characterized in that** the method is carried out for optimizing the mounting position of the NFC tag (21) in the electronic terminal (11) with the protective device (10), wherein the concave depression (24) has a depth greater than or equal to the thickness of the NFC inserted or to be inserted into the concave depression (24).

9. The method according to anyone of claims 1 to 3, **characterized in that** the method is carried out for optimizing the mounting position of the NFC tag (21) in the electronic terminal (11) with the protective device (10), wherein the receiving device (20) of the protective device (10) is designed as a receiving pocket (31).

10. The method according to anyone of claims 1 to 3 or 5 to 9, **characterized in that** the method is carried out for optimizing the mounting position of the NFC tag (21) in the electronic terminal (11) with the protective device (10), wherein the receiving device (20) of the protective device (10) is provided on the inside or the outside of the protective device (10).

11. The method according to anyone of claims 1 to 10, **characterized in that** the NFC tag (21) is provided as an NFC chip or NFC sticker.

## Revendications

1. Procédé d'optimisation d'une position de montage d'une étiquette NFC, pour laquelle l'étiquette NFC fournit une intensité de signal maximale et/ou une qualité de signal maximale et/ou un rapport signal/bruit maximum, dans une borne électronique sous la forme d'un téléphone portable, d'un smartphone et/ou d'une tablette, avec un dispositif de protection (10), qui présente une paroi arrière (12) et au moins un élément de cadre (13), dans lequel la paroi arrière (12) et l'élément de cadre (13) délimitent un espace de réception (15), dans lequel la borne électronique (11) est insérée, et avec une étiquette NFC (21), dans lequel le dispositif de protection (10) présente un dispositif de réception (20), dans lequel l'étiquette NFC (21) est reçue, et en ce que le dispositif de réception (20) est disposé ou conçu à une position définie sur/dans le dispositif de protection (10), de sorte que l'étiquette NFC (21) reçue dans le dispositif de réception (20) par rapport à la borne électronique (11) présente dans le dispositif de protection une position de montage optimisée, pour laquelle l'étiquette NFC (21) fournit une intensité de signal maximale et/ou une qualité de signal maximale et/ou un rapport signal/bruit maximum, dans lequel le procédé est **caractérisé par** les étapes suivantes :
a) le positionnement de l'étiquette NFC sur la borne électronique ;
b) l'initiation d'une communication NFC avec un lecteur NFC ;
c) la détermination permettant de savoir si la communication a réussi ;
d) dans lequel les étapes a) à c) sont réalisées par rapport à une variation d'au moins l'un des paramètres suivants
- une position de l'étiquette NFC par rapport à la borne électronique ;
- une orientation de l'étiquette NFC par rapport à la borne électronique ;
- une distance entre l'étiquette NFC et la borne électronique ;
- un rapprochement de l'étiquette NFC avec le lecteur NFC ;
- un type de lecteur NFC.
e) la détermination d'au moins une position, à laquelle la communication a réussi.

2. Procédé selon la revendication 1, **caractérisé en ce que** pour déterminer au moins une position, à laquelle la communication a réussi, les étapes a) à c) sont réalisées en variant l'un des paramètres dans deux ou plusieurs passages.

3. Procédé selon la revendication 1 ou 2, **caractérisé en ce que** la position, à laquelle la communication a réussi, est enregistrée dans un fichier résultats.

4. Procédé selon l'une quelconque des revendications 1 à 3, **caractérisé en ce que** le procédé est réalisé pour optimiser la position de montage de l'étiquette NFC (21) dans la borne électronique (11) avec le dispositif de protection (10), dans lequel le dispositif de réception (20) du dispositif de protection (10) est une ouverture de réception (22), laquelle est conçue dans le dispositif de protection (10), en particulier dans la paroi arrière (12) du dispositif de protection (10), dans lequel l'ouverture de réception (22) présente en particulier une forme adaptée au contour de l'étiquette NFC (21) à recevoir et dans lequel en particulier le dispositif de protection (10) présente dans la zone de délimitation (23) de l'ouverture de réception (22) une épaisseur, qui est supérieure ou égale à l'épaisseur de l'étiquette NFC (21) à insérer ou insérée dans l'ouverture de réception (22).

5. Procédé selon l'une quelconque des revendications 1 à 3, **caractérisé en ce que** le procédé est réalisé pour optimiser la position de montage de l'étiquette NFC (21) dans la borne électronique (11) avec le dispositif de protection (10), dans lequel le dispositif de réception (20) du dispositif de protection (10) est conçu comme évidement concave (24) dans le dispositif de protection (10), en particulier comme évidement concave (24) dans la paroi arrière (12) du dispositif de protection (10).

6. Procédé selon la revendication 5, **caractérisé en ce que** le procédé est réalisé pour optimiser la position de montage de l'étiquette NFC (21) dans la borne électronique (11) avec le dispositif de protection (10), dans lequel l'évidement concave (24) est formée par un fond formé par le dispositif de protection (10) et une paroi latérale (26) dépassant du fond (25), formée par le dispositif de protection (10). Et dans lequel en particulier le fond (25) fait saillie par rapport à la surface du dispositif de protection (10) entourant la cavité concave (24).

7. Procédé selon l'une quelconque des revendications 5 ou 6, **caractérisé en ce que** le procédé est réalisé pour optimiser la position de montage de l'étiquette NFC (21) dans la borne électronique (11) avec le dispositif de protection (10), dans lequel pour fixer une étiquette NFC (21) insérée dans l'évidement concave (24) du dispositif de protection (10) au moins une patte de fixation (27) est prévue, ou dans lequel la paroi latérale (26) de l'évidement concave (24) présente au moins une contre-dépouille (28) pour fixer une étiquette NFC (21) insérée dans l'évidement concave (24) du dispositif de protection (10).

8. Procédé selon l'une quelconque des revendications 5 à 7, **caractérisé en ce que** le procédé est réalisé pour optimiser la position de montage de l'étiquette NFC (21) dans la borne électronique (11) avec le dispositif de protection (10), dans lequel l'évidement concave (24) présente une profondeur, qui est supérieure ou égale à l'épaisseur de l'étiquette NFC (21) à insérer ou insérée dans l'évidement concave (24).

9. Procédé selon l'une quelconque des revendications 1 à 3, **caractérisé en ce que** le procédé est réalisé pour optimiser la position de montage de l'étiquette NFC (21) dans la borne électronique (11) avec le dispositif de protection (10), dans lequel le dispositif de réception (20) du dispositif de protection (10) est conçu comme poche de réception (31).

10. Procédé selon l'une quelconque des revendications 1 à 3 ou 5 à 9, **caractérisé en ce que** le procédé est réalisé pour optimiser la position de montage de l'étiquette NFC (21) dans la borne électronique (11) avec le dispositif de protection (10), dans lequel le dispositif de réception (20) du dispositif de protection (10) est prévu sur le côté interne ou le côté externe du dispositif de protection (10).

11. Procédé selon l'une quelconque des revendications 1 à 10, **caractérisé en ce que** l'étiquette NFC (21) est conçue comme puce NFC ou autocollant NFC.
